# EUROPÄISCHE PATENTSCHRIFT

(11) **EP 0 713 020 B1**
(45) Veröffentlichungstag und Bekanntmachung des Hinweises auf die Patenterteilung: **01.12.1999**
(21) Anmeldenummer: 95116732.9
(22) Anmeldetag: 24.10.1995
(51) Int. Cl.: F16C 11/04, B23Q 16/02, H02G 11/00, H01H 9/02

(54) **Schwenkeinrichtung**
Pivoting device
Dispositif de pivotement

(30) Priorität: 17.11.1994 DE 9418390 U
(43) Veröffentlichungstag der Anmeldung: 22.05.1996
(73) Patentinhaber: Hans-Joachim Bernstein Compact-Gehäuse GmbH, 32479 Hille (DE)
(72) Erfinder: Wecke,Rolf,Dipl.-Ing., D-31675 Bückeburg (DE); Weiss,Jürgen, D-32312 Lübbecke (DE)
(74) Vertreter: Loesenbeck, Karl-Otto, Dipl.-Ing.

(56) Entgegenhaltungen:
- EP-A- 0 073 694
- US-A- 4 428 554

## Beschreibung

Die vorliegende Erfindung betrifft eine Schwenkeinrichtung gemäß dem Oberbegriff des Anspruches 1.

Um Steuergehäuse, die beispielsweise die Steuerungselektrik für den Betrieb von Maschinen enthalten, entsprechend den Anforderungen verschwenken zu können, werden derartige Schwenkeinrichtungen eingesetzt. Dabei ist üblicherweise das Unterteil fest, beispielsweise mit einem maschinenseitigen Kabelrohr, durch das die Steuerkabel geführt werden, verbunden, während das Oberteil das Steuergehäuse trägt.

Da abhängig von der maschinen- und betriebsseitigen Situation der Schwenkbereich des Steuergehäuses unterschiedlich sein kann, ist eine Begrenzung des Schwenkbereiches erforderlich, der durch Anschlagmittel erfolgt, die bei bekannten Schwenkeinrichtungen eine abgestufte Verschwenkung des Steuergehäuses ermöglichen.

Diese nur in Stufen durchführbare Begrenzung des Schwenkbereiches ist jedoch unbefriedigend, da vielfach eine recht genaue Schwenkbereichsbegrenzung erforderlich ist, die bei den bekannten Schwenkeinrichtungen nur mit einem erheblichen konstruktiven Aufwand verwirklicht werden kann.

Eine Schwenkeinrichtung mit den Merkmalen des Oberbegriffs des Anspruchs 1 ist aus der US-A 4 428 554 bekannt. Dort ist gezeigt und beschrieben, daß das Oberteil gegenüber dem Unterteil dadurch drehbar ist, daß in einem Kugelkanal eine Kugel plaziert ist, die in einer Endstellung an einem Anschlag und einem Mitnehmer des Oberteiles anliegt. Die Kugel liegt an den Wandungen der Kugelkanales an, sodaß sich einen Schwenkbereich von ca. 720° ergibt.

Der vorliegenden Erfindung liegt daher die Aufgabe zugrunde, eine Schwenkeinrichtung der gattungsgemäßen Art so zu gestalten, daß mit konstruktiv einfachen Mitteln der Schwenkbereich praktisch stufenlos verstellbar ist.

Diese Aufgabe wird durch eine Schwenkeinrichtung mit den Merkmalen des kennzeichnenden Teil des Anspruches 1 gelöst.

Je nach Anzahl der in den Kugelkanal eingeführten Kugeln kann der Schwenkwinkel des Oberteils klein oder groß gewählt werden.
Ein maximaler Schwenkbereich liegt dann vor, wenn keine Kugel im Kugelkanal einliegt, während dann, wenn der Kugelkanal vollständig mit Kugeln gefüllt ist, gar keine Schwenkmöglichkeit gegeben ist, da die erste Kugel dann am Mitnehmer und die letzte Kugel am Anschlag anliegt.

Da im Fall, daß keine Kugel im Kugelkanal plaziert ist, der Mitnehmer unmittelbar an den Anschlag anschlägt, wird verhindert, daß das Oberteil unbeabsichtigt über den maximalen Schwenkbereich hinaus verschwenkt wird, was ansonsten zu einer Beschädigung beispielsweise der innen geführten Steuerkabel führen könnte.

Trotzdem kann es erforderlich sein, daß die Verschwenkung des Oberteils bzw. des Steuergehäuses über einen Schwenkwinkel von 360° hinaus verschwenkt werden soll. Nach einer vorteilhaften Ausgestaltung der Erfindung ist diese Möglichkeit dann gegeben, wenn der Anschlag innerhalb der Kugelbahn über einen gewissen Winkelbereich verschiebbar gelagert ist.

Eine weitere vorteilhafte Ausgestaltung der Erfindung sieht vor, daß die Kugeln aus Kunststoff gebildet sind. Hierdurch wird eine elastische Abfederung beim Anschlagen der Kugeln an den Anschlag erreicht, was eine materialschonende und benutzerfreundliche Handhabung ermöglicht.

Der Anschlag kann an beliebiger Stelle innerhalb der Kugelbahn vorgesehen sein, wobei vorzugsweise eine Position gewählt wird, die die Kugelbahn etwa halbiert, so daß gleiche Schwenkbereiche sowohl bei einer Linksals auch bei einer Rechtsverschwenkung gegeben sind.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: eine erfindungsgemäße Schwenkeinrichtung in einer Vorderansicht,
- Fig. 2: einen Teilquerschnitt durch die Schwenkeinrichtung gemäß der Linie II-II in Fig. 1,
- Fig. 3: einen Querschnitt durch ein weiteres Ausführungsbeispiel einer erfindungsgemäßen Schwenkeinrichtung.

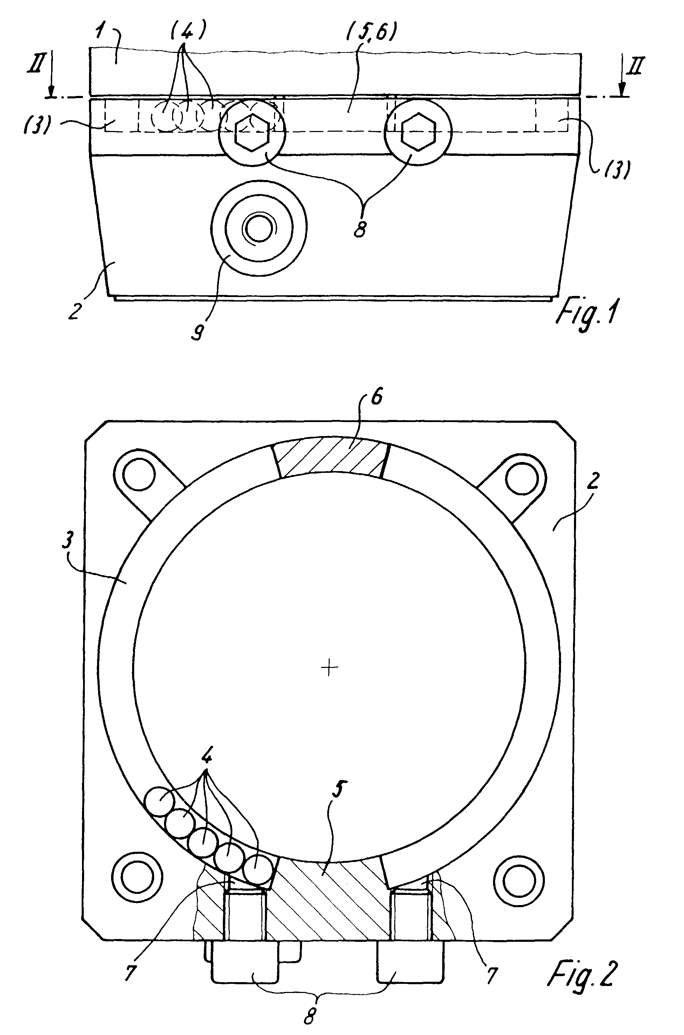

Eine in der Fig. 1 dargestellte Schwenkeinrichtung besteht in ihrem Grundaufbau aus einem Unterteil 2, das über eine Klemmschraube 9 mit einem maschinenseitigen Kabelrohr fest verbindbar ist, und einem darauf schwenkbar gelagerten Oberteil 1.

In den vorliegenden Ausführungsbeispielen weist das Unterteil 2 einen kreisförmigen Kugelkanal 3 auf, in dem Kugeln 4 angeordnet sind, deren Durchmesser kleiner ist als die zugeordnete Breite des Kugelkanals 3, so daß sie leichtgängig im Kugelkanal 3 abrollen können.
Statt im Unterteil 2 kann der Kugelkanal auch im Oberteil 1 vorgesehen sein, wobei dann selbstverständlich die übrigen Funktionsteile entsprechend zu plazieren sind.

In den vorliegenden Ausführungsbeispielen ist das Oberteil mit einem Mitnehmer 6 versehen, der in die Kugelbahn 3 hineinragt.

Das Unterteil 2 weist einen gleichfalls in die Kugelbahn 3 ragenden Anschlag 5 auf, an dem in verschwenkter Endstellung eine von mehreren aneinanderstoßenden Kugeln anliegt. Der Mitnehmer 6 hingegen liegt an der dieser genannten Kugel gegenüberliegenden an, die das Ende einer Kugelreihe bildet.

Bei dem in den Fig. 1 und 2 gezeigten Ausführungsbeispielen ist der Anschlag 5 mit dem Unterteil 2 fest verbunden und so angeordnet, daß er die Kugelbahn 3 in zwei gleiche Abschnitte teilt.

In jeden so gebildeten Kugelbahnabschnitt mündet eine Einfüllöffnung 7, die beispielsweise als Gewindebohrungen ausgebildet sein können, in die Schrauben 8, mit denen die Einfüllöffnungen 7 verschließbar sind, eingedreht sind.

Durch die Einfüllöffnungen 7 können die Kugeln 4 eingeführt bzw. entnommen werden, so daß sich je nach Anzahl der in der Kugelbahn befindlichen Kugeln 4 der Schwenkbereich des Oberteiles, der durch den freien Raum der Kugelbahn 3 bestimmt wird, nahezu stufenlos ändern läßt.

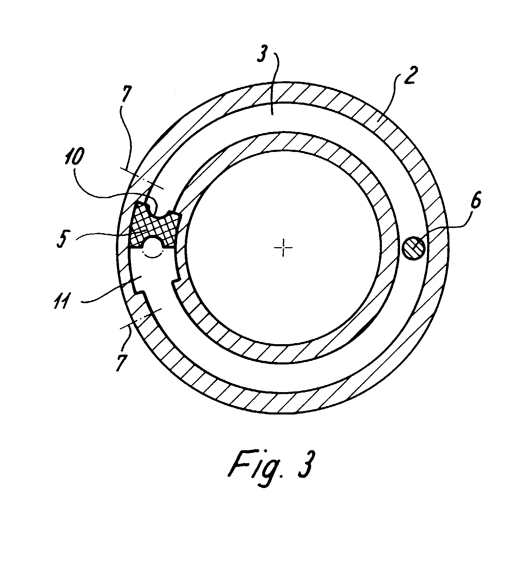

Während der Mitnehmer 6 bei dem in den Fig. 1 und 2 gezeigten Ausführungsbeispiel als Kreisringsegment ausgebildet ist, ist dieser bei der in der Fig. 3 dargestellten Schwenkeinrichtung stiftförmig gestaltet.

Hierbei ist der Anschlag 5 nicht fester Bestandteil des Unterteils 2, sondern gegenüber diesem innerhalb eines bestimmten Winkelbereiches bewegbar. Hierzu ist er in einer Schwenkbahn 11 formschlüssig gelagert, die in ihrer Breite größer ist als die Breite der sich zu beiden Seiten daran anschließenden Kugelbahn 3. Dadurch wird ein den Verschiebebereich des Anschlages 5 begrenzender Absatz gebildet.

Im übrigen ist der Anschlag 5, dessen Schwenkbahn 11 den gleichen mittleren Krümmungsradius aufweist wie die Kugelbahn 3, auf seinen der Kugelbahn 3 zugewandten Endseiten als Kalotte 10 ausgebildet, in der die angeschlagene Kugel einliegt.

Ebenso wie bei dem Ausführungsbeispiel nach den Fig. 1 und 2 weist das Unterteil 2 Einfüllöffnungen 7 auf, die hier allerdings nur durch eine strichpunktierte Linie angedeutet sind.

Der Vorteil dieses Ausführungsbeispiels besteht darin, daß das Oberteil 1 gegenüber dem Unterteil 2 über einen Schwenkbereich von 360° hinaus gedreht werden kann, wobei dieser Schwenkbereich bestimmt wird durch die Länge der Schwenkbahn 11.
Die Herstellung des bewegbaren Anschlages 5 aus einem elastischen Material, beispielweise einem Kunststoff, kann ebenso Handhabungsvorteile bringen wie der Einsatz von aus Kunststoff bestehenden Kugeln 4.

## Patentansprüche

1. Schwenkeinrichtung für ein mit einer Maschine verbundenes Steuergehäuse, mit einem Unterteil (2) und einem darauf drehbar gelagerten Oberteil (1), wobei im Unter- und/oder Oberteil (2, 1) ein Kugelkanal (3) vorgesehen ist, in der ein Mitnehmer (6) des Oberteiles (1) und ein Anschlag (5) des Unterteil (2) ragt, durch den der Schwenkbreich des Oberteiles (1) begrenzbar ist, **dadurch gekennzeichnet,** daß der Kugelkanal (3) mit einer Mehrzahl von Kugeln (4) bestückt ist, wobei der Durchmesser der Kugeln (4) geringfügig kleiner ist als die Breite des Kugelkanals (3) und in den Kugelkanal (3) zumindest eine Einfüllöffnung (7) mündet, durch die die Kugeln (4) einführbar sind.

2. Schwenkeinrichtung nach Anspruch 1, dadurch gekennzeichnet, daß der Kugel kanal (3) kreisbogenförmig ausgebildet ist.

3. Schwenkeinrichtung nach Anspruch 1, dadurch gekennzeichnet, daß, der Anschlag (5) die Kugelbahn (3) in zwei gleiche Abschnitte teilt.

4. Schwenkeinrichtung nach Anspruch 1 oder 3, dadurch gekennzeichnet, daß jedem Abschnitt der Kugelbahn (3) eine Einfüllöffnung (7) zugeordnet ist.

5. Schwenkeinrichtung nach einem der Ansprüche 1 bis 4, dadurch gekennzeichnet, daß die Einfülöffnungen (7) als Gewindebohrungen ausgebildet sind, die durch Schrauben (8) verschließbar sind.

6. Schwenkeinrichtung nach Anspruch 1, dadurch gekennzeichnet, daß die Kugeln (4) aus Kunststoff bestehen.

7. Schwenkeinrichtung nach Anspruch 1, dadurch gekennzeichnet, daß der Mitnehmer (6) als Kreisringsegment ausgebildet ist.

8. Schwenkeinrichtung nach Anspruch 1, dadurch gekennzeichnet, daß der Mitnehmer (6) als Stift ausgebildet ist.

9. Schwenkeinrichtung nach Anspruch 1, dadurch gekennzeichnet, daß der Anschlag (5) in einer Schwenkbahn (11) verschiebbar geführt ist, die im Bereich der Kugelbahn (3) angeordnet ist, dabei deren mittleren Krümmungsradius aufweist, in ihrer Breite größer ist als die Breite der Kugelbahn (3) und in Form eines Kreisringsegmentes ausgebildet ist.

10. Schwenkeinrichtung nach Anspruch 9, dadurch gekennzeichnet, daß die der Kugelbahn (3) zugewandten Endbereiche in Form einer Kalotte (10) ausgebildet sind.

11. Schwenkeinrichtung nach Anspruch 9, dadurch gekennzeichnet, daß der Anschlag (5) aus einem elastischen Material, vorzugsweise einem Kunststoff besteht.

## Claims

1. A pivoting apparatus for a control housing connected to a machine. comprising a lower portion (2) and an upper portion (1) mounted rotatably thereon, wherein provided in the lower and/or the upper portion (2, 1) is a ball channel (3) into which project an entrainment member (6) of the upper portion (1) and an abutment (5) of the lower portion (2). by which the range of pivotal movement of the upper portion (1) can be limited, characterised in that the ball channel (3) is provided with a plurality of balls (4). wherein the diameter of the balls (4) is slightly smaller than the width of the ball channel (3), and opening into the ball channel (3) is at least one filling opening (7) through which the balls (4) can be introduced.

2. A pivoting apparatus according to claim 1 characterised in that the ball channel (3) is of an arcuate configuration.

3. A pivoting apparatus according to claim 1 characterised in that the abutment (5) divides the ball track (3) into two equal portions.

4. A pivoting apparatus according to claim 1 or claim 3 characterised in that a filling opening (7) is associated with each portion of the ball track (3).

5. A pivoting apparatus according to one of claims 1 to 4 characterised in that the filling openings (7) are in the form of screwthreaded bores which are closable by screws (8).

6. A pivoting apparatus according to claim 1 characterised in that the balls (4) comprise plastics material.

7. A pivoting apparatus according to claim 1 characterised in that the entrainment member (6) is in the form of a segment of a circular ring.

8. A pivoting apparatus according to claim 1 characterised in that the entrainment member (6) is in the form of a pin.

9. A pivoting apparatus according to claim 1 characterised in that the abutment (5) is guided displaceably in a pivoting track (11) which is arranged in the region of the ball track (3), is of the mean radius of curvature thereof, is greater in width than the width of the ball track (3) and is in the form of a segment of a circular ring.

10. A pivoting apparatus according to claim 9 characterised in that the end regions which are towards the ball track (3) are in the form of a part-spherical cup (10).

11. A pivoting apparatus according to claim 9 characterised in that the abutment (5) comprises an elastic material, preferably a plastics material.

## Revendications

1. Dispositif de pivotement pour un boîtier de commande relié à une machine, comportant une partie inférieure (2) et une partie supérieure (1) montée tournante sur la première, dans la partie inférieure (2) et/ou la partie supérieure (1) étant prévu un canal à billes (3), dans lequel pénètre un entraîneur (6) de la partie supérieure (1) et une butée (5) de la partie inférieure (2), par laquelle le mouvement de pivotement de la partie supérieure (1) est limitable, caractérisé en ce que le canal à billes (3) est équipé d'une pluralité de billes (4), le diamètre des billes (4) étant légèrement inférieur à la largeur du canal à billes (3) et dans le canal à billes (3) débouchant au moins une ouverture de remplissage (7) par laquelle les billes (4) peuvent être introduites.

2. Dispositif de pivotement selon la revendication 1, caractérisé en ce que le canal à billes (3) est en forme d'arc de cercle.

3. Dispositif de pivotement selon la revendication 1, caractérisé en ce que la butée (5) partage le chemin de billes (3) en deux parties égales.

4. Dispositif de pivotement selon la revendication 1 ou 3, caractérisé en ce qu'à chaque partie du chemin de billes (3) est affectée une ouverture de remplissage (7).

5. Dispositif de pivotement selon l'une des revendications 1 à 4, caractérisé en ce que les ouvertures de remplissage (7) sont réalisées sous la forme de perçages taraudés qui peuvent être obturés par des vis (8).

6. Dispositif de pivotement selon la revendication 1, caractérisé en ce que les billes (4) sont en matière plastique.

7. Dispositif de pivotement selon la revendication 1, caractérisé en ce que l'entraîneur (6) est réalisé sous la forme d'un segment d'anneau circulaire.

8. Dispositif de pivotement selon la revendication 1, caractérisé en ce que l'entraîneur (6) est réalisé sous la forme d'une broche.

9. Dispositif de pivotement selon la revendication 1, caractérisé en ce que la butée (5) est guidée de manière à pouvoir coulisser dans une voie de pivotement (11), qui est disposée dans la région du chemin de billes (3), et qui présente le même rayon de courbure moyen, sa largeur étant plus grande que la largeur du chemin de billes (3), et celle-ci étant réalisée sous la forme d'un segment d'anneau circulaire.

10. Dispositif de pivotement selon la revendication 9, caractérisé en ce que les zones terminales de la butée, tournées vers le chemin de billes (3), sont réalisées sous la forme d'une calotte (10).

11. Dispositif de pivotement selon la revendication 9, caractérisé en ce que la butée (5) est réalisée en un matériau élastique, de préférence en une matière synthétique.
